# EUROPÄISCHE PATENTSCHRIFT

(11) **EP 3 574 166 B1**
(45) Veröffentlichungstag und Bekanntmachung des Hinweises auf die Patenterteilung: **20.07.2022**
(21) Anmeldenummer: 18702909.5
(22) Anmeldetag: 19.01.2018
(51) Int. Cl.: E04G 3/28, F03D 80/50, E04G 3/30

(54) **ROTORBLATTBEFAHRANLAGE UND VERFAHREN ZUR POSITIONIERUNG DER WARTUNGSKAMMER EINER ROTORBLATTBEFAHRANLAGE**
ROTOR BLADE ACCESS SYSTEM AND METHOD FOR POSITIONING THE MAINTENANCE CHAMBER OF A ROTOR BLADE ACCESS SYSTEM
SYSTÈME DE MANIPULATION DE PALE DE ROTOR ET PROCÉDÉ DE POSITIONNEMENT DE LA CHAMBRE DE MAINTENANCE D'UN SYSTÈME DE MANIPULATION DE PALE DE ROTOR

(30) Priorität: 25.01.2017 DE 102017101354
(43) Veröffentlichungstag der Anmeldung: 04.12.2019
(73) Patentinhaber: WP Systems GmbH, 01945 Ruhland (DE)
(72) Erfinder: RENNER, Ole, 01099 Dresden (DE); BOESNER, Jan, 01099 Dresden (DE); ZAVESKY, Michael, 01069 Dresden (DE); HÖFNER, Robert, 01127 Dresden (DE); MÜLLER, Holger, 01855 Sebnitz (DE)
(74) Vertreter: Sperling, Thomas
(86) Internationale Anmeldenummer: PCT/DE2018/100043
(87) Internationale Veröffentlichungsnummer: WO 2018/137733

(56) Entgegenhaltungen:
- WO-A2-2009/121792
- DE-U1-202011 100 388
- NL-C2- 1 019 943

## Beschreibung

Die Erfindung betrifft eine Rotorblattbefahranlage und ein Verfahren zur Positionierung der Wartungskammer einer Rotorblattbefahranlage zur Inspektion, Wartung oder Reparatur an Rotorblättern von Windkraftanlagen.

Um eine Inspektion, Wartung oder Reparatur von Rotorblättern von Windenergieanlagen effektiv und sicher durchführen zu können, werden sogenannte Befahranlagen eingesetzt.

Im Stand der Technik ist eine Befahranlage für Außenwände von Bauwerken beispielsweise aus der DE 43 39 638 A1 bekannt. Dabei besteht der Nachteil für diese Befahranlage, dass eine horizontale Positionierung nur sehr eingeschränkt realisierbar ist und ein Einsatz an Windenergieanlagen somit nicht möglich ist. Derartige Befahranlagen sind somit nur für einzelne spezielle zugeschnittene Anwendungensfälle einsetzbar.

Im Unterschied zur vorgenannten Konstruktion wird nach der DE 199 09 698 C2 eine Vorrichtung zur Durchführung von Reparatur- und Serviceleistungen insbesondere an Rotorblättern von Windkraftanlagen offenbart, bei welcher die Arbeitskabine an einem Ausleger eines Kranfahrzeuges befestigt ist. Die Arbeitskabine wird dabei kranartig über Ausleger in die entsprechende Höhe am Rotorblatt gebracht und dort positioniert. Nachteilig an dieser Konstruktion ist, dass durch den Einsatz eines Kranfahrzeuges ein hoher apparativer Aufwand für die Reparatur von Windenergieanlagen entsteht, was die Reparaturkosten stark verteuert und damit negative Auswirkungen auf den wirtschaftlichen Betrieb einer solchen Anlage hat.

Weiterhin werden nach dem Stand der Technik Rotorblattbefahranlagen eingesetzt, die mit Hilfe von Stahlseilen und Seildurchlaufwinden in Richtung der Gondel der Windenergieanlage nach oben gezogen werden. Um ein Arbeiten am Rotorblatt von der Befahranlage aus zu ermöglichen. Dabei muss die Wartungskammer der Rotorblattbefahranlage relativ zum Rotorblatt positioniert werden.

Dafür sind Rotorblattbefahranlagen bekannt, welche die Wartungskammer an einem Abdruckrahmen derart beweglich ausbilden, dass die Wartungskammer auf die entsprechende erforderliche Distanz zwischen dem Arbeitsbereich am Rotorblatt und dem Turm der Windenergieanlage verfahren werden kann.

In der DE 10 2010 060 639 A1 ist beispielsweise eine Arbeitsbühnenanlage offenbart, in welcher die Arbeitsbühne in einem horizontalen Abstand zum Turm durch einen Führungsausleger veränderbar ist und die Arbeitsbühne hierdurch in horizontaler Richtung positionierbar ist.

Weiterhin ist als Problem im Stand der Technik bekannt, dass die Rotorblätter von Windenergieanlagen aufgrund der aerodynamischen Anforderungen sowie den Belastungen während des Betriebes der Windenergieanlage vor gekrümmt sind. Durch diese Vorkrümmung wird sichergestellt, dass Rotorblätter auch bei hohen Windgeschwindigkeiten und entsprechend großer Durchbiegung nicht mit dem Turm der Windenergieanlage kollidieren. Wird das Rotorblatt in Wartungsstellung in Richtung Boden gedreht und aus dem Wind gepitcht, resultiert daraus ein Versatz der Rotorblattspitze zur vertikalen Turmmittelachse, die fortfolgend auch als Turmradius bezeichnet wird.

Die Befahranlagen nach dem Stand der Technik basieren häufig auf dem Prinzip, dass das Rotorblatt in eine Öffnung zwischen den Längsprofilen des Abdruckrahmens der Befahranlage zu positionieren ist. Somit existiert konstruktionsbedingt ein maximaler Abstand, in welchen eine Rotorblattspitze eingefädelt beziehungsweise eingeführt werden muss. Dieser Abstand ist somit konstruktionsbedingt fest vorgegeben.

Ist der Versatz der Rotorblattspitze jedoch so groß, dass dies außerhalb der Öffnung zwischen den Längsprofilen des Abdruckrahmens liegt, so muss die Rotorblattspitze mit teils kritischen Zusatzmaßnahmen von Hand innerhalb der Öffnung positioniert werden.

Alternativ dazu muss die Rotorblattbefahranlage selbst händisch in ihrer Lage ausgelenkt und in der horizontalen Ebene verschwenkt werden, um mit der Öffnung unter die Rotorblattspitze zu gelangen. Durch die Haftung der Reifen des Abdruckrahmens am Turm und eine starre Verbindung der Längs- und Querprofile des Abdruckrahmens wird dies aber verhindert beziehungsweise stark erschwert.

Aus der WO 2009/121 792 A2 geht eine Arbeitsplattform für Windenergieanlagen hervor, wobei die Arbeitsplattform auf Tragarmen ruht, die drehbeweglich mit einem Gerüst verbunden sind. Dadurch wird in gewissen Grenzen erreicht, dass die Arbeitsplattform in der horizontalen Ebene, bei einer Belastung durch Wind beispielsweise, beweglich ist.

Die DE 20 2011 100 388 U1 offenbart eine Rotorblatt-Befahranlage, welche über Seilwinden vertikal verfahrbar ausgebildet ist und die darüber hinaus durch Positionierung der Angriffspunkte der Fahrseile einen Neigungsausgleich der Arbeitsplattform realisieren kann.

Auch aus der NL 1019943 A ist eine Vorrichtung für die Durchführung von Arbeiten an Windkraftanlagen bekannt.

Den Rotorblattbefahranlagen nach dem Stand der Technik ist somit der Nachteil zu eigen, dass eine Positionierung der Wartungskammern in der horizontalen Ebene nicht oder nur unzureichend möglich ist oder aber das durch die separate Führung der Wartungskammern an Kränen hohe Aufwendungen entstehen. Außerdem ist der Einsatz von Kränen aufgrund der Ausmaße und Dimensionen der Windkraftanlagen teilweise nicht mehr möglich. Weiterhin ist nachteilig, dass Rotorblattbefahranlagen zumeist auf spezielle geometrische Verhältnisse zugeschnitten sind und somit nur bestimmte Typen von Windkraftanlagen damit repariert werden können. Eine flexible Nutzung einer Rotorblattbefahranlage für verschiedene Windkraftanlagen und Rotorblattgeometrien ist häufig nicht möglich aber wünschenswert, um kostengünstige Reparaturen oder Serviceleistungen für Windkraftanlagen durchführen zu können.

Die Aufgabe der Erfindung besteht somit darin, eine Rotorblattbefahranlage zur Verfügung zu stellen, die geeignet ist, die Wartungskammer in vertikaler, horizontaler Richtung optimal zu positionieren und die darüber hinaus geeignet ist, in der horizontalen Ebene in einer dritten Raumrichtung die Wartungskammer speziell für das Einführen der Rotorblattspitze in die Wartungskammer beziehungsweise das Einfädeln in die Öffnung des Abdruckrahmens zur Aufnahme der Rotorblattspitze zu positionieren.

Die Aufgabe wird durch eine Rotorblattbefahranlage und ein Verfahren zur Positionierung der Wartungskammer einer Rotorblattbefahranlage gemäß der selbständigen Ansprüche gelöst. Weiterbildungen sind in den abhängigen Patentansprüchen angegeben.

Die Aufgabe der Erfindung wird insbesondere durch eine Rotorblattbefahranlage mit einer an einem Abdruckrahmen angeordneten und relativ zu diesem horizontal und aktiv bewegbaren Wartungskammer gelöst, wobei der Abdruckrahmen an einem Turm einer Windkraftanlage in vertikaler Richtung geführt und in horizontaler Richtung am Turm abgestützt ist. Der Abdruckrahmen ist gebildet aus einem Querprofil und zwei zueinander über das Querprofil beabstandete Längsprofile, wobei jedes Längsprofil des Abdruckrahmens über ein Schwenkgelenk mit dem Querprofil drehbeweglich in der horizontalen Ebene verbunden ist. Die Wartungskammer ist auf zwei Seiten entlang der Längsprofile in horizontaler Richtung, der Turmradiusrichtung, bewegbar ausgebildet. Dazu sind unabhängig voneinander angetriebene Antriebseinheiten an der Wartungskammer angeordnet, welche die Wartungskammer an den Längsprofilen entlang und unabhängig voneinander bewegen. Die Antriebseinheit der Wartungskammer ist dabei derart mit dem Längsträger verbunden, dass die Wartungskammer darüber temporär und relativ zueinander fixierbar ist. Durch die Fixierung der Wartungskammer auf einer Seite an einem Längsprofil und die Bewegung auf der anderen Seite an dem gegenüberliegenden Längsprofil führt die Wartungskammer eine Bewegung in der horizontalen Ebene aus.

Bevorzugt sind die Antriebseinheiten der Wartungskammer zur horizontalen Bewegung entlang der Längsprofile elektromotorisch betreibbar ausgebildet.

Weiterhin vorteilhaft sind Sensoren zur Messung der Biegespannung und/oder der Auszugsposition der Längsprofile des Abdruckrahmens vorgesehen, wodurch die Rotorblattbefahranlage in ihrer Bewegung in der horizontalen Ebene steuer- und regelbar ist.

Vorteilhaft sind auch Sensoren zur Bestimmung der vertikalen und horizontalen Position der Wartungskammer an der Rotorblattbefahranlage ausgebildet, um die Befahrung oder Phasen davon steuer- und regelbar auszubilden.

Bevorzugt sind als Mittel zur vertikalen Positionierung der Rotorblattbefahranlage eine oder mehrere elektromotorisch betreibbare Seildurchlaufwinden vorgesehen, welche über Stahlseile die Höhenverstellung realisieren.

Eine Regel- und Steuereinrichtung zur Positionierung der Rotorblattbefahranlage in vertikaler Richtung am Turm und zur Positionierung der Wartungskammer in horizontaler Richtung am Abdruckrahmen ist vorteilhaft in die Gesamtkonzeption der Rotorblattbefahranlage integriert und in der Wartungskammer angeordnet. Besonders bevorzugt wird der Vorgang der Positionierung in der horizontalen Ebene in y-Richtung zum Einführen der Rotorblattspitze in die Dachöffnung geregelt, wobei die Positionierung unter Kontrolle der auftretenden Biegespannungen an den Längsprofilen erfolgt.

Alternativ zum elektromotorischen Betrieb der Antriebseinheiten zur Verfahrung der Wartungskammer können die Antriebseinheiten manuell betreibbar ausgebildet sein.

Der Abdruckrahmen ist bevorzugt über Fahrwerksräder am Turm der Windkraftanlage abgestützt, um das Verfahren der Rotorblattbefahranlage entlang des Turmes zu realisieren.

Die Aufgabe der Erfindung wird weiterhin auch durch ein Verfahren zur Positionierung der Wartungskammer einer Rotorblattbefahranlage gelöst, welches dadurch gekennzeichnet ist, dass
- die vertikale Positionierung der Wartungskammer in z-Richtung über den Einsatz von Seildurchlaufwinden bis zum Erreichen der Rotorblattspitze erfolgt,
- die horizontale Positionierung der Wartungskammer in x-Richtung durch beidseitiges Verfahren der Wartungskammer auf den Längsträgern erfolgt und
- die Positionierung der Wartungskammer in der horizontalen Ebene in y-Richtung in Abstimmung mit der Position der Rotorblattspitze über die Fixierung der der Rotorblattspitze zugewandten Seite der Wartungskammer mittels der Antriebseinheit und das Ausfahren der Längsträger aus der Wartungskammer mittels der Antriebseinheit auf der abgewandten Seite der Wartungskammer erfolgt und abschließend
- die vertikale Positionierung der Wartungskammer unter Aufnahme der Rotorblattspitze in der Wartungskammer bis zur vorgebbaren Position der Wartungskammer am Rotorblatt erfolgt.

Bevorzugt erfolgt die Regelung der Positionierung der Wartungskammer in der horizontalen Ebene in y-Richtung in Abhängigkeit der Differenz der Bewegungen in x-Richtung zueinander oder des Ausfahrweges der Längsprofile des Abdruckrahmens.

Alternativ erfolgt die Regelung vorteilhaft dadurch, dass die Verschwenkbewegung derart geregelt erfolgt, dass Biegespannungen in den Längsträgern des Abdruckrahmens unterhalb der Streckgrenze des Materials bleiben.

Die Konzeption der Erfindung besteht nunmehr darin, dass die Längendifferenz der Längsträger des Abdruckrahmens durch das einseitige Ausfahren aus der Wartungskammer bei gleichzeitiger Fixierung auf der anderen Seite das Wartungssystem in der horizontalen Ebene horizontal ausgelenkt wird und dadurch die Rotorblattspitze in den Bereich der Dachöffnung der Wartungskammer gelangt. Der Abdruckrahmen wirkt dabei wie ein Koppelgetriebe. Aufgrund der geringen Auslenkung der Koppelglieder werden zwei der vier Gelenke als sogenannte Compliant-Gelenke ausgeführt, dass heißt, dass die Bewegung durch Verformung der Koppelglieder anstatt durch echte Gelenke ermöglicht wird. Die verbleibenden zwei Gelenke werden als klassische Gelenke ausgeführt. Diese verbinden die Längsprofile des Abdruckrahmens mit dem turmseitigen Querprofil. Die Auslenkung erfolgt durch den gezielten Ausschub eines Längsprofils des Abdruckrahmens aus dem Aufnahmeprofil der Wartungskammer, während das andere Längsprofil seine Position nicht verändert. Die Antriebe der Längsprofile sind dabei mechanisch voneinander entkoppelt. Der Ausschub des Längsprofils aus der Wartungskammer kann zum Beispiel mit Hilfe von Motoren und Sensoren, aber auch mit manuellen Einrichtungen erfolgen. Dadurch wird die Rotorblattspitze in einen Bereich innerhalb der Breite der beiden Längsprofile positioniert.

Durch die kinematisch erzwungene Auslenkung der beiden Längsprofile des Abdruckrahmens, die auch als Längsträger bezeichnet werden, entstehen in diesen Biegespannungen. Die Auslenkung wird dabei stets so regelungstechnsich bemessen, dass sich die Biegespannungen unterhalb kritischer Bereiche bewegen. Der Breitenversatz muss dazu in Abhängigkeit von Abdruckdistanz oder Ausfahrweg des Abdruckrahmens reguliert werden.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Rotorblattbefahranlage in der Seitenansicht in der Stellung kurz vor der Einführung der Rotorblattspitze in die Wartungskammer,
- Fig. 2a:: Rotorblattbefahranlage Ansicht von oben in nicht ausgelenkter Stellung,
- Fig. 2b:: Rotorblattbefahranlage Ansicht von oben in ausgeschwenkter Stellung,
- Fig. 3:: Rotorblattbefahranlage als Viergelenk-Koppelgetriebe und
- Fig. 4:: Antriebseinheit der Wartungskammer.

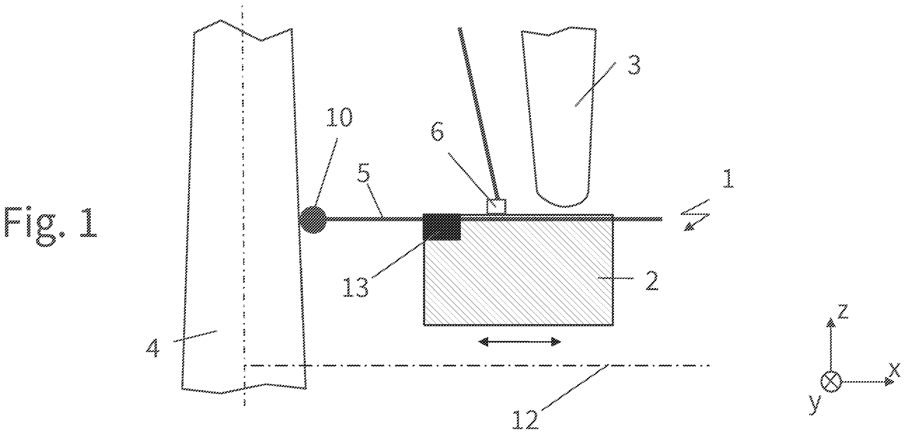

In Figur 1 ist eine Rotorblattbefahranlage 1 mit einer Wartungskammer 2 in der Phase kurz vor dem Einfädelvorgang für die Rotorblattspitze 3 dargestellt. Die Rotorblattbefahranlage 1 ist über einen Abdruckrahmen 5 und Fahrwerksräder 10 am Turm 4 der Windenergieanlage abgestützt. Die Wartungskammer 2 befindet sich knapp unterhalb der Rotorblattspitze 3 zum Einführen in die Wartungskammer 2. Zur besseren Darstellbarkeit der räumlichen Anordnung ist in den Figuren ein dreidimensionales Koordinatensystem x,y,z eingezeichnet. Die Turmradiusrichtung 12 entspricht der x-Achse, welche auch die horizontale Achse darstellt. Die vertikale Achse in z-Richtung bezeichnet die Höhe. Schließlich ist die y-Achse in der horizontalen Ebene liegend in Figur 1 in die Bildebene hineingerichtet. Die Positionierung der Rotorblattbefahranlage 1 in z-Richtung erfolgt durch den Einsatz von Seildurchlaufwinden 6, welche an der Windenergieanlage oben aufgehängt sind. Beim Einfädelvorgang muss die Rotorblattspitze 3 in eine in dieser Darstellung nicht gezeigte Dachöffnung 15 der Wartungskammer 2 eingeführt werden. Ein Versatz der Rotorblattspitze 3 in y-Richtung relativ zur Mittelachse des Turmradius 4 muss dabei überwunden beziehungsweise ausgeglichen werden.

Die Wartungskammer 2 wird entlang des Abdruckrahmens 5 in horizontaler x-Richtung mittels der Antriebseinheiten 13 für die Wartungskammer 2 translatorisch bewegt, was auch durch einen Doppelpfeil unterhalb der Wartungskammer 2 dargestellt ist.

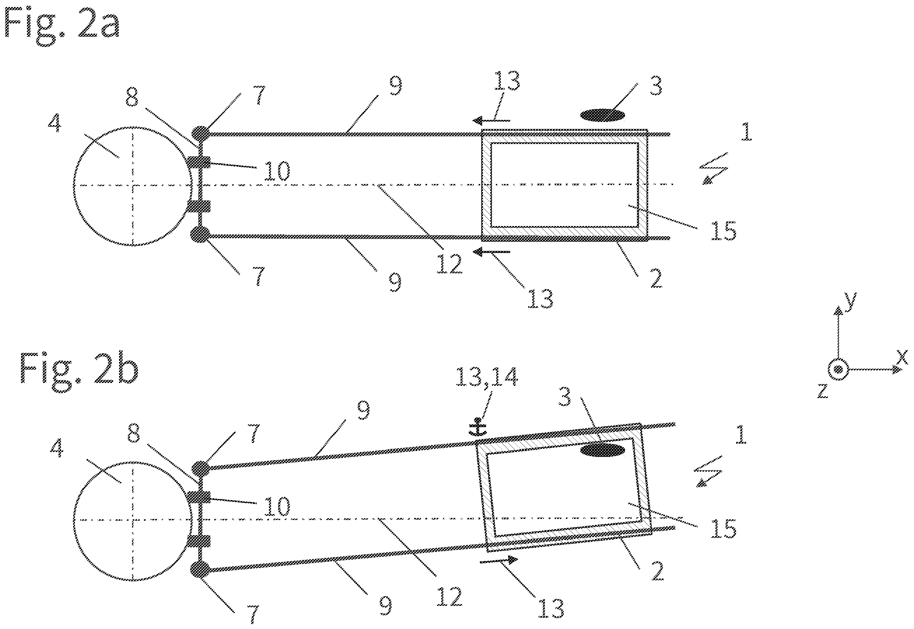

In Figur 2a ist die Rotorblattbefahranlage 1 mit Wartungskammer 2 in der Grundstellung für den vertikalen Transport bis zur Höhe der Rotorblattspitze 3 in der Draufsicht von oben dargestellt. Die Wartungskammer 2 wird in x-Richtung durch Antriebseinheiten 13 entlang der Längsprofile 9 des Abdruckrahmens 5 zur Rotorblattspitze 3 hin positioniert. Die Dachöffnung 15 der Wartungskammer 2 und die Rotorblattspitze 3 weisen zueinander einen Versatz in y-Richtung auf, was das Einführen der Rotorblattspitze 3 in die Wartungskammer 2 verhindert. Der Abdruckrahmen 5 wird gebildet aus einem Querprofil 8, auch als Querträger bezeichnet, und zwei Längsprofilen 9, welche jeweils endseitig am Querprofil 8 über Schwenkgelenke 7 miteinander verbunden sind. Die Längsprofile 9 werden aufgenommen von der Wartungskammer 2 und diese ist mit den Längsprofilen 9 jeweils über die Antriebseinheiten 13 verbunden. Über die Antriebseinheit 13 bewegt sich die Wartungskammer 2 entlang der Längsprofile 9 horizontal in x-Richtung. Der Abdruckrahmen 5 stützt sich über Fahrwerksräder 10 am Turm 4 der Windenergieanlage ab. Die Schwenkgelenke 7 lassen eine Rotation der Längsprofile 9 um die vertikale z-Achse zu.

In Figur 2b ist die Rotorblattbefahranlage 1 gemäß Figur 2a in verschwenkter Stellung dargestellt. Die Wartungskammer 2 mit den Längsprofilen 9 ist gegenüber der Turmradiusrichtung 12 verschwenkt beziehungsweise ausgelenkt, so dass die Dachöffnung 15 in den Bereich der Rotorblattspitze 3 und von dieser nun aufgenommen werden kann. Nunmehr kann bei einem weiteren Anheben der Rotorblattbefahranlage 1 mittels der Seildurchlaufwinden das Rotorblatt 3 von der Wartungskammer 2 aufgenommen und durch die Wartungskammer 2 hindurch geführt werden.

Damit wird das Rotorblatt 3 in der Wartungskammer 2 vom Servicepersonal unter den optimierten Arbeitsbedingungen der Wartungskammer 2 behandelbar, und notwendige Reparaturen und Oberflächenbehandlungen können unabhängiger von den Witterungsbedingungen durchgeführt werden.

Der Versatz der Rotorblattbefahranlage 1 in Richtung der horizontalen Ebene in y-Richtung wird realisiert durch das Ausfahren des Längsprofils 9 durch die Antriebseinheit 13 an der Wartungskammer 2 auf einer Seite bei gleichzeitiger Fixierung des Längsprofils 9 in der Fixierstellung 14 auf der anderen Seite. Durch die Fixierung eines Längsprofils 9 und der Verfahrung des anderen Längsprofils 9 des Abdruckrahmens 5 wird ein Versatz als Distanz in der horizontalen Ebene erzeugt. Die Bewegungsrichtung resultiert aus einem nicht gesperrten Rotationsfreiheitsgrad um die z-Achse in den Schwenkgelenken 7. Der Querträger 8 bleibt bei dieser Bewegung ortsfest und weist eine konstante Länge auf. Die dabei entstehenden Biegespannungen in den Längsprofilen 9 des Abdruckrahmens 5 bleiben unterhalb der Streckegrenze des Materials.

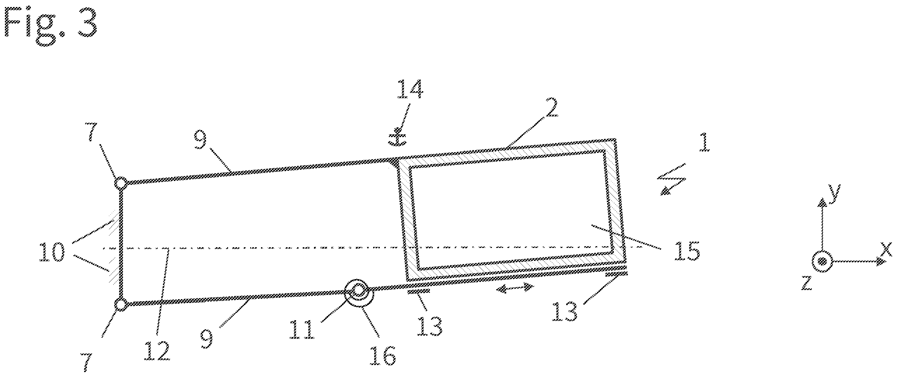

In Figur 3 ist das kinematische Prinzip des Viergelenk-Koppelgetriebes gemäß den Figuren 1 und 2 dargestellt. Dabei wird ein virtuelles Gelenk 11 schematisch gezeigt, welches seiner Funktion nach als Torsionsfeder 16 zur Kennzeichnung der Rückstellkraft im Compliant-Gelenk symbolisiert ist.

Neben dem virtuellen Gelenk 11 sind zusätzlich die Schwenkgelenke 7 vorgesehen, welche neben der elastischen Verformung des Längsprofiles 9 des Abdruckrahmens 5 die Schwenkbewegung der Rotorblattbefahranlage 1 in der horizontalen Ebene in y-Richtung ergänzen.

Durch die Fixierung eines Längsprofils 9 in der Fixierstellung 14 und das Ausschieben des anderen Längsprofils 9 des Abdruckrahmens 5 mit Hilfe der Antriebseinheit 13 in x-Richtung wird die Schwenkbewegung der Wartungskammer 2 in y-Richtung erzeugt. Die Auslenkung, beziehungsweise der Versatz, ist zu erkennen an dem sich zur Turmradiusrichtung 12 ergebenden Winkel der Längsprofile 9. Die dabei entstehenden Biegespannungen in den Längsprofilen 9 des Abdruckrahmens 5 bleiben unterhalb der Streckgrenze des Materials, da die maximale Auslenkung aufgrund der Längenverhältnisse der Koppelglieder nur relativ gering ist aber dabei ausreicht, dass die Rotorblattspitze in den Bereich der Dachöffnung 15 der Wartungskammer gelangt und in die Wartungskammer 2 eingeführt werden kann.

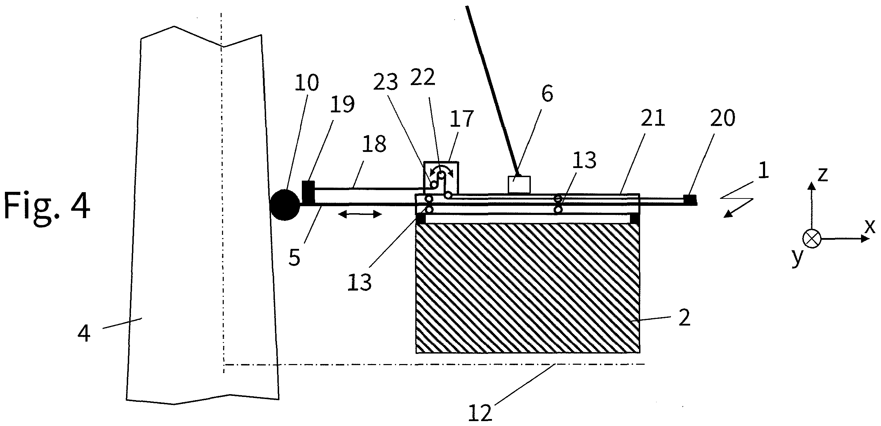

In Fig. 4 ist eine bevorzugte Ausgestaltung der Antriebseinheit 13 in horizontaler x-Richtung durch eine Rollenbatterie zur Lagerung des Abdruckrahmens 5 innerhalb des Tragrahmens 21 der Wartungskammer 2 dargestellt.

Die Antriebseinheit 13 ist aus einem entlang des Längsprofils 9 gespannten Zahnriemen 18 und einem Motor 17 mit in den Zahnriemen 18 eingreifender Synchronscheibe 22 ausgebildet.

Der Tragrahmen 21 der Wartungskammer 2 nimmt die Längsprofile 9 des Abdruckrahmens 5 an seinen Längsseiten in der Art einer Führung durch ein Aufnahmeprofil auf. Die reibungsminimierte Führung der Profile des Tragrahmens 2 und des Längsprofiles 9 zueinander wird durch eine Rollenbatterie realisiert.

Am Turm 4 der Windenergieanlage stützen sich die Fahrwerksräder 10 des Abdruckrahmens 5 in Turmradiusrichtung 12 ab. Das Längsprofil 9 des Abdruckrahmens 5 weist an beiden Enden einen Fixierpunkt für den Zahnriemen 18 auf. Zwischen dem vorderen Fixierpunkt 19 und dem hinteren Fixierpunkt 20 verläuft der Zahnriemen 18 entlang des Längsprofils 9. Über zwei Zahnriemenumlenkrollen 23 wird der optimale Eingriff der Synchronscheibe 22 zum Antreiben und Arretieren des Abdruckrahmen 5 gewährleistet. Zum Verfahren der Wartungskammer 2 entlang der Längsprofile 9 des Abdruckrahmens 5 wird der Motor 17 betätigt, welcher die Synchronscheibe 22 antreibt. Über den Eingriff der Synchronscheibe 22 in den am Längsprofil 9 verspannten Zahnriemen 18 wird die Wartungskammer 2 in x-Richtung je nach Drehrichtung des Motors 17 horizontal verfahren.

Die Seildurchlaufwinde 6 ist oben auf dem Tragrahmen 21 der Wartungskammer 2 angeordnet und realisiert das vertikale Verfahren der Rotorblattbefahranlage 1 in z-Richtung.

### Bezugszeichenliste

- 1: Rotorblattbefahranlage
- 2: Wartungskammer
- 3: Rotorblatt, Rotorblattspitze
- 4: Turm
- 5: Abdruckrahmen
- 6: Seildurchlaufwinde
- 7: Schwenkgelenk
- 8: Querprofil Abdruckrahmen, Querträger
- 9: Längsprofil Abdruckrahmen, Längsprofil
- 10: Fahrwerksräder
- 11: virtuelle Gelenke
- 12: Turmradiusrichtung
- 13: Antriebseinheit, Rollenbatterie zur Lagerung des Abdruckrahmens innerhalb des Tragrahmens
- 14: Fixierstellung
- 15: Dachöffnung
- 16: Torsionsfeder zur Darstellung der Rückstellkraft im Compliant-Gelenk
- 17: Motor zum Antrieb des Abdruckrahmens
- 18: Zahnriemen
- 19: Vorderer Fixierpunkt für den Zahnriemen
- 20: Hinterer Fixierpunkt für den Zahnriemen
- 21: Tragrahmen, Aufnahmeprofil für Längsprofil
- 22: Synchronscheibe zum Antreiben und Arretieren des Abdruckrahmens
- 23: Zahnriemenumlenkrolle

## Patentansprüche

1. Rotorblattbefahranlage (1) mit einer an einem Abdruckrahmen (5) angeordneten und relativ zu diesem horizontal und aktiv bewegbaren Wartungskammer (2), wobei der Abdruckrahmen (5) an einem Turm (4) einer Windkraftanlage in horizontaler Richtung am Turm (4) abgestützt ist, wobei der Abdruckrahmen (5) ein Querprofil (8) und zwei zueinander über das Querprofil (8) beabstandete Längsprofile (9) aufweist und jedes Längsprofil (9) des Abdruckrahmens (5) über ein Schwenkgelenk (7) mit dem Querprofil (8) drehbeweglich in der horizontalen Ebene verbunden ist, **dadurch gekennzeichnet, dass** die Wartungskammer (2) auf zwei Seiten entlang der Längsprofile (9) in Turmradiusrichtung (12) unabhängig voneinander mittels Antriebseinheiten (13) bewegbar und an den Längsprofilen (9) unabhängig voneinander temporär fixierbar ausgebildet ist, wobei durch die Fixierung der Wartungskammer (2) auf einer Seite an einem Längsprofil (9) und die Bewegung auf der anderen Seite an dem gegenüberliegenden Längsprofil (9) die Wartungskammer (2) eine Bewegung in der horizontalen Ebene ausführbar ausgebildet ist.

2. Rotorblattbefahranlage (1) nach Anspruch 1, **dadurch gekennzeichnet, dass** die Antriebseinheiten (13) der Wartungskammer (2) zur horizontalen Bewegung entlang der Längsprofile (9) elektromotorisch betreibbar ausgebildet sind.

3. Rotorblattbefahranlage (1) nach Anspruch 1 oder 2, **dadurch gekennzeichnet, dass** Sensoren zur Messung der Biegespannung und/oder der Auszugsposition der Längsprofile (9) des Abdruckrahmens (5) ausgebildet sind.

4. Rotorblattbefahranlage (1) nach einem der Ansprüche 1 bis 3, **dadurch gekennzeichnet, dass** Sensoren zur Bestimmung der vertikalen und horizontalen Position der Wartungskammer (2) an der Rotorblattbefahranlage (1) ausgebildet sind.

5. Rotorblattbefahranlage (1) nach einem der Ansprüche 1 bis 4, **dadurch gekennzeichnet, dass** als Mittel zur vertikalen Positionierung der Rotorblattbefahranlage (1) eine elektromotorisch betreibbare Seildurchlaufwinde (6) ausgebildet ist.

6. Rotorblattbefahranlage (1) nach einem der Ansprüche 1 bis 5, **dadurch gekennzeichnet, dass** eine Regel- und Steuereinrichtung zur Positionierung der Rotorblattbefahranlage (1) in vertikaler Richtung und zur Positionierung der Wartungskammer (2) in horizontaler Richtung am Abdruckrahmen (5) und die Positionierung in der horizontalen Ebene ausgebildet ist.

7. Rotorblattbefahranlage (1) nach Anspruch 1, **dadurch gekennzeichnet, dass** die Antriebseinheiten (13) manuell betreibbar ausgebildet sind.

8. Rotorblattbefahranlage (1) nach einem der Ansprüche 1 bis 7, **dadurch gekennzeichnet, dass** der Abdruckrahmen (5) über Fahrwerksräder (10) am Turm (4) der Windkraftanlage abgestützt ist.

9. Verfahren zur Positionierung der Wartungskammer (2) einer Rotorblattbefahranlage (1) nach einem der vorangehenden Ansprüche, **dadurch gekennzeichnet, dass**
- die vertikale Positionierung der Wartungskammer in z-Richtung über den Einsatz von Seildurchlaufwinden (6) bis zum Erreichen der Rotorblattspitze (3) erfolgt,
- die horizontale Positionierung der Wartungskammer (2) in x-Richtung durch beidseitiges Verfahren der Wartungskammer (2) auf den Längsprofilen (9) erfolgt und
- die Positionierung der Wartungskammer (2) in der horizontalen Ebene in y-Richtung in Abstimmung mit der Position der Rotorblattspitze (3) über die Fixierung der der Rotorblattspitze (3) zugewandten Seite der Wartungskammer (2) mittels der Antriebseinheit (13) und das Ausfahren der Längsprofile (9) aus der Wartungskammer (2) mittels der Antriebseinheit (13) auf der abgewandten Seite der Wartungskammer (2) erfolgt und abschließend
- die vertikale Positionierung der Wartungskammer (2) unter Aufnahme der Rotorblattspitze (3) in der Wartungskammer (2) bis zur vorgebbaren Position der Wartungskammer (2) am Rotorblatt (3) erfolgt.

10. Verfahren nach Anspruch 9, **dadurch gekennzeichnet, dass** die Positionierung der Wartungskammer (2) in der horizontalen Ebene in y-Richtung in Abhängigkeit der Differenz der Bewegungen der Längsprofile (9) in x-Richtung zueinander oder des Ausfahrweges der Längsprofile (9) des Abdruckrahmens (5) geregelt erfolgt.

11. Verfahren nach Anspruch 9, **dadurch gekennzeichnet, dass** die Verschwenkbewegung derart geregelt erfolgt, dass Biegespannungen in den Längsprofilen (9) des Abdruckrahmens (5) unterhalb der Streckgrenze des Materials bleiben.

## Claims

1. A rotor blade access system (1) having a maintenance chamber (2) which is arranged on a support frame (5) and which can be moved horizontally and actively relative to same, the support frame (5) being supported on a tower (4) of a wind turbine, in the horizontal direction against the tower (4), the support frame (5) having a transverse profile (8) and two longitudinal profiles (9) spaced from one another by means of the transverse profile (8), and each longitudinal profile (9) of the support frame (5) being connected to the transverse profile (8) via a pivot joint (7) such that it can rotate in the horizontal plane, **characterised in that** the maintenance chamber (2) is designed such that it can be moved along the longitudinal profiles (9) in the tower radial direction (12) on two sides, independently of one another, by means of drive units (13), and such that it can be temporarily fixed on the longitudinal profiles (9) independently of one another, wherein the maintenance chamber (2) is designed to be able to execute a movement in the horizontal plane because the maintenance chamber (2) is fixed on a longitudinal profile (9) on one side and can move on the opposite longitudinal profile (9) on the other side.

2. The rotor blade access system (1) according to Claim 1, **characterised in that** the drive units (13) of the maintenance chamber (2) are designed to be electric-motor-operated for horizontal movement along the longitudinal profiles (9).

3. The rotor blade access system (1) according to Claim 1 or 2, **characterised in that** sensors are designed for measuring the bending stress and/or the extension position of the longitudinal profiles (9) of the support frame (5).

4. The rotor blade access system (1) according to any one of Claims 1 to 3, **characterised in that** sensors are designed for determining the vertical and horizontal position of the maintenance chamber (2) on the rotor blade access system (1).

5. The rotor blade access system (1) according to any one of Claims 1 to 4, **characterised in that** an electric-motor-operated continuous winch (6) is designed as means for vertical positioning of the rotor blade access system (1).

6. The rotor blade access system (1) according to any one of Claims 1 to 5, **characterised in that** a closed-loop and open-loop control device is designed for positioning the rotor blade access system (1) in the vertical direction and for positioning the maintenance chamber (2) in the horizontal direction on the support frame (5) and positioning in the horizontal plane.

7. The rotor blade access system (1) according to Claim 1, **characterised in that** the drive units (13) are designed to be operated manually.

8. The rotor blade access system (1) according to any one of Claims 1 to 7, **characterised in that** the support frame (5) is supported on the tower (4) of the wind turbine via running gearwheels (10).

9. A method for positioning the maintenance chamber (2) of a rotor blade access system (1) according to any one of the preceding claims, **characterised in that**
- the vertical positioning of the maintenance chamber in the z direction takes place using continuous winches (6) until the rotor blade tip (3) is reached,
- the horizontal positioning of the maintenance chamber (2) in the x direction takes place by moving the maintenance chamber (2) on the longitudinal profiles (9) on both sides, and
- the positioning of the maintenance chamber (2) in the horizontal plane in the y direction in correspondence with the position of the rotor blade tip (3) takes place by fixing the side of the maintenance chamber (2) facing the rotor blade tip (3) by means of the drive unit (13) and extending the longitudinal profiles (9) out of the maintenance chamber (2) by means of the drive unit (13) on the side of the maintenance chamber (2) facing away, and then
- the vertical positioning of the maintenance chamber (2), accommodating the rotor blade tip (3) in the maintenance chamber (2), takes place as far as the predefinable position of the maintenance chamber (2) on the rotor blade (3).

10. The method according to Claim 9, **characterised in that** the positioning of the maintenance chamber (2) in the horizontal plane in the y direction takes place in a controlled manner depending on the difference between the movements of the longitudinal profiles (9) in the x direction relative to one another or on the extension distance of the longitudinal profiles (9) of the support frame (5).

11. The method according to Claim 9, **characterised in that** the pivoting movement takes place in a controlled manner such that bending stresses in the longitudinal profiles (9) of the support frame (5) remain below the yield limit of the material.

## Revendications

1. Installation d'accès à une pale de rotor (1) avec une chambre de maintenance (2) disposée au niveau d'un cadre de pression (5) et mobile horizontalement et activement par rapport à celui-ci, le cadre de pression (5) étant appuyé contre une tour (4) d'éolienne dans le sens horizontal contre la tour (4), le cadre de pression (5) présentant un profil transversal (8) et deux profils longitudinaux (9) espacés l'un de l'autre par un profil transversal (8) et chaque profil longitudinal (9) du cadre de pression (5) étant relié au profil transversal (8) de manière mobile et pivotante sur le plan horizontal par une articulation orientable (7), **caractérisée en ce que** la chambre de maintenance (2) est conçue de manière mobile sur deux côtés le long des profils longitudinaux (9) indépendamment l'un de l'autre dans le sens radial de la tour (12) à l'aide d'unités d'entraînement (13) et de manière à pouvoir être temporairement fixable au niveau des profils longitudinaux (9) indépendamment l'un de l'autre, la chambre de maintenance (2) étant conçue de manière à pouvoir effectuer un mouvement dans le plan horizontal par la fixation de la chambre de maintenance (2) sur un côté au niveau d'un profil longitudinal (9) et par le mouvement sur l'autre côté au niveau du profil longitudinal opposé (9).

2. Installation d'accès à une pale de rotor (1) selon la revendication 1, **caractérisée en ce que** les unités d'entraînement (13) de la chambre de maintenance (2) sont conçues de manière exploitable par un moteur électrique pour le mouvement horizontal le long des profils longitudinaux (9).

3. Installation d'accès à une pale de rotor (1) selon la revendication 1 ou 2, **caractérisée en ce que** des capteurs sont conçus pour la mesure de la contrainte de flexion et/ou de la position d'extraction des profils longitudinaux (9) du cadre de pression (5).

4. Installation d'accès à une pale de rotor (1) selon l'une quelconque des revendications 1 à 3, **caractérisée en ce que** des capteurs sont conçus pour la détermination de la position verticale et horizontale de la chambre de maintenance (2) au niveau de l'installation d'accès à une pale de rotor (1).

5. Installation d'accès à une pale de rotor (1) selon l'une quelconque des revendications 1 à 4, **caractérisée en ce qu'un** palan à câble passant (6) exploitable par un moteur électrique est conçu comme moyen de positionnement vertical de l'installation d'accès à une pale de rotor (1).

6. Installation d'accès à une pale de rotor (1) selon l'une quelconque des revendications 1 à 5, **caractérisée en ce qu'un** dispositif de régulation et de commande est conçu pour le positionnement de l'installation d'accès à une pale de rotor (1) dans le sens vertical et pour le positionnement de la chambre de maintenance (2) dans le sens horizontal au niveau du cadre de pression (5) et le positionnement dans le plan horizontal.

7. Installation d'accès à une pale de rotor (1) selon la revendication 1, **caractérisée en ce que** les unités d'entraînement (13) sont conçues de manière exploitable manuellement.

8. Installation d'accès à une pale de rotor (1) selon l'une quelconque des revendications 1 à 7, **caractérisée en ce que** le cadre de pression (5) est appuyé contre la tour (4) d'éolienne par des roues de mécanisme de déplacement (10).

9. Procédé pour le positionnement de la chambre de maintenance (2) d'une installation d'accès à une pale de rotor (1) selon l'une quelconque des revendications précédentes, **caractérisé en ce que**
- le positionnement vertical de la chambre de maintenance dans le sens z a lieu par l'utilisation de palans à câble passant (6) jusqu'à ce que la pointe de la pale de rotor (3) soit atteinte,
- le positionnement horizontal de la chambre de maintenance (2) dans le sens x a lieu par le déplacement sur les deux côtés de la chambre de maintenance (2) sur les profils longitudinaux (9), et
- le positionnement de la chambre de maintenance (2) dans le plan horizontal dans le sens y a lieu en accord avec la position de la pointe de la pale de rotor (3) par la fixation du côté de la chambre de maintenance (2) tourné vers la pointe de la pale de rotor (3) au moyen de l'unité d'entraînement (13) et la sortie des profils longitudinaux (9) de la chambre de maintenance (2) a lieu au moyen de l'unité d'entraînement (13) sur le côté opposé de la chambre de maintenance (2), et enfin
- le positionnement vertical de la chambre de maintenance (2) a lieu par le logement de la pointe de pale de rotor (3) dans la chambre de maintenance (2) jusqu'à la position prédéfinissable de la chambre de maintenance (2) au niveau de la pale de rotor (3).

10. Procédé selon la revendication 9, **caractérisé en ce que** le positionnement de la chambre de maintenance (2) dans le plan horizontal dans le sens y se fait de manière régulée en fonction de la différence des mouvements des profils longitudinaux (9) dans le sens x l'un par rapport à l'autre ou de la trajectoire de sortie des profils longitudinaux (9) du cadre de pression (5).

11. Procédé selon la revendication 9, **caractérisé en ce que** le mouvement de basculement a lieu de manière régulée de telle sorte que des contraintes de flexion restent en dessous de la limite d'étirage du matériau dans les profils longitudinaux (8) du cadre de pression (5).
